# EUROPÄISCHE PATENTSCHRIFT

(11) **EP 0 672 706 B1**
(45) Veröffentlichungstag und Bekanntmachung des Hinweises auf die Patenterteilung: **28.05.2003**
(21) Anmeldenummer: 95102767.1
(22) Anmeldetag: 27.02.1995
(51) Int. Cl.: C08J 3/22, C08L 23/02, C08K 9/08

(54) **Farbmittelzubereitung für die Herstellung von Masterbatches**
Colouring composition for making master batches
Composition d'agent colorant pour la préparation de mélanges mères

(30) Priorität: 15.03.1994 DE 4408682; 06.12.1994 DE 4443316
(43) Veröffentlichungstag der Anmeldung: 20.09.1995
(73) Patentinhaber: Clariant GmbH, 65929 Frankfurt am Main (DE)
(72) Erfinder: Bernhardt, Uwe, D-56130 Bad Ems (DE); Bott, Rainer, D-56072 Koblenz (DE)

(56) Entgegenhaltungen:
- FR-A- 1 410 447
- US-A- 3 455 871
- US-A- 4 039 507
- DATABASE WPI Week 8948 Derwent Publications Ltd., London, GB; AN AN 89-351458 & JP-A-01 261 440 (UBE INDUSTRIES KK) & CHEMICAL ABSTRACTS, vol. 112, no. 14, 2.April 1990 Columbus, Ohio, US; abstract no. 120145, UBE INDUSTRIES, LTD
- DATABASE WPI Week 8116 Derwent Publications Ltd., London, GB; AN 81-28175D & JP-A-56 020 053 (DAINICHISEIKA COLOR CHEM)

## Beschreibung

Die vorliegende Erfindung betrifft eine Farbmittelzubereitung aus mindestens einem Farbmittel, das in einem schmelzbaren, bei Raumtemperatur festen Träger feinst verteilt ist. Derartige Farbmittelzubereitungen, insbesondere Pigmentzubereitungen, sind besonders für die Herstellung von Masterbatches geeignet. Unter Masterbatch werden granulatförmige, staubfreie Konzentrate eines Plastomeren oder Elastomeren mit hohen Mengen an Farbmitteln verstanden. Diese Masterbatches werden zum Einfärben von Kunststoffen verwendet, indem man sie dem einzufärbenden Kunststoffgranulat vor dem Extrudieren oder Spritzgießen zusetzt. Eine Direkteinfärbung von Kunststoffen mit Pigmenten oder Farbstoffen hat sich aufgrund der schlechten Dispergierung, Gesundheitsbelastung und hoher Kosten für die Reinigung der Apparaturen nicht durchgesetzt.

Verfahren zur Herstellung von Masterbatches und ihre verschiedenen Einsatzgebiete sind in der Literatur zahlreich beschrieben. Für die Herstellung von staubfrelen, pulverförmigen Pigment- und Farbstoffpräparationen sind zur Zeit folgende Verfahren bekannt:
- Heißmischprozeß mittels geeigneter Trägermaterialien, wie PolyethylenWachs, PVC-Pulver oder EVA (Ethylen-Vinylacetat-Copolymere). Nachteile dieser Träger sind ihr geringes Bindevermögen und ihr nicht universeller Einsatz bei der Einarbeitung in Kunststoffe;
- Extrusion und Kneten mit anschließender Vermahlung. Dieses Verfahren ist sehr aufwendig und kostenintensiv. Es müssen Träger eingesetzt werden, die mit dem einzufärbenden Kunststoff verträglich sind und ein gutes Mahlverhalten zeigen.
- Extrusion und anschließende Feinversprühung oder Heißabschlag. Dieses Verfahren ist ebenfalls kostenintensiv. Zum Einsatz gelangen hier Wachse, Harze und andere Träger.

Die DE-A-12 39 093 beschreibt ein Verfahren zur Herstellung von Pigmentkonzentraten für das Einfärben von Polyolefinen, wobei als Trägermaterial eine Mischung aus einem Ethylen-Propylen-Mischpolymerisat und einem Propylenpolymerisat eingesetzt wird.

In der DE-A-15 44 830 wird eine Pigmentzubereitung offenbart, bei der die Pigmentpartikel von einem amorphen Homo- oder Mischpolymerisat aus Propylen, Buten-1 und Hexen-1 oder einem Propylen-Ethylen-Blockpolymerisat umhüllt sind. Bei der Herstellung der Pigmentzubereitung sind Filtrations- und Trocknungsschritte erforderlich.

In der JP-88/88287 werden Präparationen beschrieben,die aus Pigment, Gleitmittel, Füllstoffen und einem amorphen Polyolefin bestehen.

Die DE-A-26 08 600 betrifft Pigmentkonzentrate zur Einfärbung von thermoplastischen Kunststoffen, enthaltend Pigment, Polyolefinwachs, ein EVA-Copolymer und kolloidale Kieselsäure.

JP-A- 1 261 440 offenbart eine Farbmittelzusammensetzung, die einen hohen Pigmentgehalt zuläßt, und als Trägerpolymer Terpolymere mit 5 bis 30 Gew.% Buten-1 verwendet.

FR-A-1 410 447 beschreibt Polymerkompositionen aus einem Hauptpolymer und einem Konzentrat, welches einen Carrier aus Poly-1-buten oder aus einem Copolymer von 1-Buten mit Ethylen oder Propylen sowie ein dispergiertes Additiv enthält. Das Hauptpolymer unterscheidet sich dabei von dem Carrier-Polymer. Das dispergierte Additiv kann Ruß oder ein anorganisches Pigment sein.

US-A-3,455,871 beschreibt die Herstellung einer ein Trägerpolymer und Pigmente enthaltenden Farbmittelzusammensetzung. Das Trägerpolymer kann ein kristallines Copolymer mit einem Buten-1-Anteil von mehr als 75 % sein. Die Pigmentkonzentration im Endprodukt liegt jedoch bei höchstens 25%.

JP-A-56-20052 offenbart Farbmittelzusammensetzungen, die Propylen-Buten-1-Copolymere enthalten.

Alle bisher in der Praxis eingesetzten Pigmentpräparationen für die Polymereinfärbung enthalten mit dem einzufärbenden Polymer unverträgliche Bestandteile, sind aufgrund des ungünstigeren Trägermaterials bei gleichem Pigmentanteil deutlich farbschwächer und trüber, zeigen schlechteres Filtrationsverhalten, Stippigkeit und schlechtere Verspinnbarkeit, bedürfen zur Herstellung aufwendiger, teurer Dispergiergeräte (z.B. Doppelschneckenextruder) und können nicht in gleicher, hoher Farbmittelkonzentration mit nachfolgend beschriebenem Eigenschaftsprofil hergestellt werden.

Die Aufgabe der vorliegenden Erfindung bestand nun darin, staubfreie Farbmittelzubereitungen für die Masterbatchproduktion, die Herstellung von Compounds und die Direkteinfärbung von Plastomeren und Elastomeren zur Verfügung zu stellen, die in ökonomisch und ökologisch vorteilhafter Weise hergestellt werden können und Produkte hochwertiger Qualität liefern, insbesondere Masterbatches mit hoher Spinnqualität und hohen Filterstandzeiten im Polypropylen- und Polyesterfaserbereich sowie bessere Folienqualität im Polyethylen- und Polypropylenbereich.

Die Aufgabe konnte überraschenderweise dadurch gelöst werden, daß das Farbmittel zunächst in einem aus Poly-α-olefinen bestehenden Trägermaterial zusammen mit einem Hilfsmittel zur Verbesserung der Rieselfähigkeit in einem Heiz-Kühl-Mischprozeß vordispergiert wird. Die so hergestellte Farbmittelzusammensetzung kann zur Herstellung von Masterbatches, für die Herstellung von Compounds oder für die Direkteinfärbung von Kunststoffen eingesetzt werden.

Gegenstand der vorliegenden Erfindung ist eine Farbmittelzusammensetzung, bestehend im wesentlichen aus einem oder mehreren in einem amorphen Poly-α-olefin in einer Konzentration von 60 bis 90 gew.-% feinverteilten organischen oder anorganischen Pigment und einem Hilfsmittel zur Verbesserung der Reiselfähigkeit, dadurch gekennzeichnet, daß das amorphe Poly-α-olefin zwischen 70 und 150°C schmilzt und ein Terpolymer aus Ethylen, Propylen und Buten-1 mit einem Buten-1-Anteil von 65 bis 80 Gew.-% insbesondere 65 bis 70 Gew.-% ist.

Bevorzugte Farbmittelzusammensetzungen bestehen aus 70 bis 85 Gew.-%, eines organischen oder anorganischen Pigments, 5 bis 39 Gew.-%, vorzugsweise 8,5 bis 35 Gew.-%, des amorphen Poly-α-olefins, 0,1 bis 10 Gew.-%, vorzugsweise 0,5 bis 7,5 Gew.-%, eines Hilfsmittels zur Verbesserung der Rieselfähigkeit sowie 0 bis 15 Gew.-% üblicher Füllstoffe oder Additive. Auch andere Olefine, beispielsweise Hexen-1, sind als Monomereneinheiten geeignet. Besonders bevorzugt sind Terpolymere mit einer Schmelzviskosität (bei 190°C) von 2500 bis 8200 mPas und einem mittleren Molekulargewicht von 40 000 bis 50 000. Die Herstellung dieser Terpolymere erfolgt zweckmäßigerweise durch eine übliche Niederdruck-Polymerisation der Monomeren in Gegenwart von Ziegler-Natta-Katalysatoren.

Als Hilfsmittel zur Verbesserung der Rieselfähigkeit werden Kieselsäure, vorzugsweise pyrogene Kieselsäure, Kreide, Silikate, vorzugsweise ein Aluminiumsilikat, ein Natriumsilikat, ein Natrium-Aluminiumsilikat oder ein Calciumsilikat, oder ein Polyolester einer langkettigen Fettsäure, Ölsäureamid oder ein Glycerin-Fettsäurepartialester eingesetzt. Die pyrogene Kieselsäure hat eine Teilchengröße von etwa 0,007 bis 0,015 µm.

Als Farbmittel kommen organische und anorganische Farbstoffe und Pigmente in Betracht. Als organische Pigmente werden vorzugsweise Azo- oder Disazopigmente, verlackte Azo- oder Disazopigmente oder polycyclische Pigmente, vorzugsweise Phthalocyanin-, Chinacridon-, Perylen-, Dioxazin-, Anthrachinon-, Thioindigo-, Diaryl- oder Chinophthalon-Pigmente verwendet.

Als anorganische Pigmente werden zur Pigmentierung geeignete Metalloxide, Mischoxide, Aluminiumsulfate, Chromate, Metallpulver, Perlglanzpigmente (Glimmer), Leuchtfarben, Titanoxide, Cadmium-Blei-Pigmente, vorzugsweise Eisenoxide, Ruß, Silikate, Nickeltitanate, Kobaltpigmente oder Chromoxide, verwendet.

Die erforderlichen Anteile an Poly-α-olefin und Rieselfähigkeitsverbesserer sind abhängig von der Oberflächenstruktur und Teilchengröße der verwendeten Farbmittel und müssen darauf abgestimmt werden.

Bei Verwendung organischer Pigmente ist eine Farbmittelzusammensetzung, bestehend aus 60 bis 80 Gew.-% an organischem Pigment, 12,5 bis 35 Gew.-% des amorphen Poly-α-olefins, 0,5 bis 5 Gew.-% an Rieselfähigkeitsverbesserer sowie 0 bis 7,5 Gew.-% üblicher Füllstoffe oder Additive besonders vorteilhaft.

Bei Verwendung anorganischer Pigmente ist eine Farbmittelzusammensetzung, bestehend aus 79 bis 85 Gew.-% an anorganischem Pigment, 12,5 bis 20,5 Gew.-% des amorphen Poly-α-olefins und 0,5 bis 2,5 Gew.-% an Rieselfähigkeitsverbesserer sowie 0 bis 2 Gew.-% üblicher Füllstoffe oder Additive besonders vorteilhaft.

Ruße werden zweckmäßigerweise wie organische Formulierungen rezeptiert, um staubfreie Präparationen zu erhalten.

Die erfindungsgemäßen Farbmittelzusammensetzungen können zusätzlich noch weitere Additive, wie Füllstoffe, beispielsweise Gleitmittel, Antistatika, Antiblockmittel, Antislipmittel und/oder Suspensionsstabilisatoren, enthalten.

Gegenstand der vorliegenden Erfindung ist auch ein Verfahren zur Herstellung der Farbmittelzusammensetzungen, in dem man die Einzelkomponenten zunächst vormischt, anschließend die Mischung auf eine Temperatur von 5 bis 50°C über den Erweichungspunkt des amorphen Poly-α-olefins unter mechanischem Mischen erhitzt und schließlich die Mischung auf eine Temperatur von 10 bis 30°C abkühlt.

Das Vormischen der Einzelkomponenten kann bei Raumtemperatur in einer geeigneten Mischapparatur erfolgen und dient der Erzielung einer guten Vorverteilung. Daran schließt sich eine Heißmischung unter intensivem Durchmischen an, wobei zweckmäßigerweise in einer ersten Phase bis etwa 5°C über den Erweichungspunkt des Poly-α-olefins und in einer zweiten Phase bis etwa 10 bis 50°C, vorzugsweise 20 bis 40°C, über den Erweichungspunkt des Poly-α-olefins erhitzt wird. Die erste Phase dauert etwa 5 bis 20 Minuten, vorzugsweise 7 bis 10 Minuten, die zweite Phase etwa 2 bis 15 Minuten, vorzugsweise 4 bis 10 Minuten. An die Heißmischung schließt sich eine Kühlmischung an, wobei die Farbmittelzusammensetzung auf 10 bis 30°C abgekühlt wird. Dieser Vorgang dauert normalerweise 5 bis 20 Minuten, vorzugsweise 10 bis 15 Minuten.

Bei der Heißmischung kann die Wärmeenergie über Friktion, über separate Aufheizung des Mischtroges oder über beide Arten eingebracht werden. Als vorteilhaft wird eine Vortemperierung auf ca. 30°C angesehen. Höhere Ausgangstemperaturen bei der Heißmischung führen zum Verklumpen des Trägers und zur Bildung von Bodenablagerungen. Ein Kühlen des Mischtroges nach dem Heißmischen auf die Vortemperierung ist ebenfalls vorteilhaft.

Bei der nachfolgenden Kühlmischung können zur Verbesserung der Rieselfähigkeit zusätzlich noch bis zu 0,5 Gew.-% Rieselfähigkeitsverbesserer, bezogen auf die Gesamtmischung, zugegeben werden, um eine Körnung von 0,05 bis 3 mm der staubfreien Pulvermischung zu erreichen. Auch nachfolgende Aussiebung ist möglich. Spielt die Körnung bei nachfolgenden Prozessen keine besondere Rolle, z.B. bei Einsatz der Mischung in einer Rezeptur mit intensivem Mischvorgang, kann der Kühlprozeß entfallen. Die bei der normalen Abkühlung im Abwurfbehältnis sich bildenden Agglomerate lassen sich mit entsprechender Mischtechnik einfach wieder zerteilen.

Da es keine Verfahrensrückstände gibt, entfallen bei den erfindungsgemäßen Verfahren die im Stand der Technik notwendigen Filtrations- und Trocknungsschritte.

Nach dem erfindungsgemäßen Verfahren erhält man eine staubfreie Präparation. Mittels Variationen der Zusammensetzungen und der Kühlmischzeit lassen sich verschiedene Körnungen erzielen und so eine dem Einsatzzweck angepaßte Struktur herstellen.

Die staubfreien Mischungen zeigen bei Einsatz in verschiedenen Kunststoffen überraschenderweise sehr gute Verträglichkeiten. Im Vergleich zu derzeit bekannten und vergleichbaren Pigment-Präparationen zeichnen sich die aus diesen Mischungen hergestellten Färbemittel durch eine deutlich höhere Farbstärke, höhere Brillianz und einen besseren Filterwert aus. Außerdem läßt sich in migrationssensitiven Applikationen eine deutliche Qualitätsverbesserung erzielen. Der Einsatz dieser Präparationen in Wachsen verbessert deutlich die Granulierfähigkeit, insbesondere bei der Stranggranulation.

Die erfindungsgemäßen Farbmittelzusammensetzungen werden insbesondere für die Herstellung von Masterbatches verwendet. Bei der Herstellung von Masterbatches wird zweckmäßigerweise ebenfalls mit einem am Anfang stehenden Mischprozeß gearbeitet. Zunächst wird eine Mischung aus der erfindungsgemäßen Farbmittelzusammensetzung, Trägerkunststoff, Dispergierhilfsmittel und Additiven hergestellt. Die Mischung wird mit entsprechender Mischtechnik hergestellt. Das Herstellen von Mischungen kann jedoch entfallen, wenn man die Einzelkomponenten einer Rezeptur direkt der Extrusionsanlage zuführt. In den meisten Fällen bedeutet dies aber eine Qualitätseinbuße des Endproduktes und wird deshalb in der Praxis nur bei anorganischen Pigmenten durchgeführt. Die besagte Mischung wird dann mittels einer geeigneten Dosiervorrichtung einer Extrusionsanlage zugeführt. In der Regel sind dies Ein- oder Zweischneckenextruder, es finden aber auch kontinuierliche und diskontinuierliche Kneter Verwendung. Anschließend wird eine Granulierung durchgeführt. Die Granulierung erfolgt über Strang- und Kopfgranulierung, aber auch Versprühung ist möglich.

Um bestimmte Sonderfarbtöne zu erstellen, werden Monopräparationen in einem zweiten Extrusionsgang miteinander oder nur mit Kunststoff verschnitten. Bislang wirkte sich bei der Ausarbeitung von Sonderfarbtönen der hohe Verbrauch an Monobatches nachteilig aus. Ebenfalls kostenerhöhend war bei der Produktion der zweite Extrusionsprozeß, in manchen Fällen sogar ein dritter Extrusionsprozeß. Diese Nachteile konnten durch Verwendung der erfindungsgemäßen Farbmittelzusammensetzungen abgestellt werden.

Die erfindungsgemäßen Farbmittelzusammensetzungen können auch zu Compounds sowie zur Direkteinfärbung von Kunststoffen verwendet werden. Unter Compounds versteht man Mischungen von Polymerisaten mit vorstehend genannten Additiven, Füllstoffen und/oder Farbmitteln.

Mit der erfindungsgemäßen Farbmittelzusammensetzung werden beispielsweise Polyolefine, Polyvinylchlorid (PVC), Ethylen-Vinylacetat-Copolymere (EVA), Styrol-Acrylnitril-Copolymere (SAN), Polymethylmethacrylat (PMMA), Polyethylenglykol-terephthalat (PET), Poly-butylenglykol-terephthalat (PBT) und deren Copolyester, Acrylnitril-Butadien-Styrol-Copolymere (ABS), Polyethylen-Wachse, Polypropylenwachse, Amidwachse, Kohlenwasserstoffharze, Montanwachse, aliphatische Wachse, Kautschuk, Butylkautschuk, Styrol-Block-Copolymere und Bitumen eingefärbt.

Bei den Anwendungen in Kunststoffen, speziell in der Masterbatchproduktion, wird die erfindungsgemäße staubfreie Pulvermischung eingesetzt wie normales Pigment. Es muß lediglich die Einsatzkonzentration auf den Reinpigmentgehalt umgerechnet werden. Die häufig bei organischen Pigmenten übliche Heißmischung der Gesamtrezeptur kann entfallen. Auch vermindert sich der sonst übliche Einsatz von Dispergierhilfsmitteln, wie z.B. Wachsen.

Durch das erfindungsgemäße Verfahren zur Behandlung der Pigmente und der damit verbundenen besseren Benetzung und Vorverteilung des Farbmittels durch das Poly-α-olefin konnte die Qualität des Mischens der Gesamtrezeptur verbessert werden. Der Effekt der Staubfreiheit sichert gleichzeitig eine verbesserte Handhabung des Farbmittels, d.h. es kann sowohl eine nachträgliche Mischung in der Gesamtrezeptur als auch eine Direktdosierung erfolgen, ohne Qualitäts- und Verarbeitungseinschränkungen hinzunehmen.

Die erfindungsgemäßen Farbmittelzusammensetzungen besitzen eine Reihe weiterer wichtiger anwendungstechnischer Vorteile, beispielsweise eine gute Dispergierung in Farb- und Additivbatches und damit eine hohe Qualitätsstufe, eine große Einsatzbreite und Flexibilität, da sie mit den meisten gebräuchlichen Elastomeren und Plastomeren verträglich sind, hervorragende Spinneigenschaften in Polypropylen- und Polyesterfasern, hohe Folienqualität in Polyester- und Polypropylenfolien, vereinfachte Einstellung von Sonderfarbtönen und Spezialbatchen, brillante Farben im Spritzguß, bei der Blasformung, Folienproduktion, Bändchenfertigung und Spinnfärbung.

In den folgenden Ausführungsbeispielen wurde jeweils ein Poly-α-olefin, hergestellt aus den Monomeren Ethylen, Butylen und Propylen mit folgenden Stoffparametern eingesetzt:

Poly-α-olefin 1:

| | |
|---|---|
| Schmelzviskosität bei 190°C (Rotationsviskosimeter): | ca. 7800 mPas |
| Buten-1-Gehalt: | ca. 70 Gew.-% |
| Erweichungspunkt Ring und Kugel (DIN 52011) | ca. 85°C |
| Viskositätszahl (DIN 53728) | 55 cm³/g |
| Dichte bei 23°C (DIN 53479) | 0,87 g/cm³ |
| Längenausdehnungskoeffizient | 2,4 x 10⁻⁴K⁻¹ |

Der Einsatz erfolgt im feinkörnigen Zustand (gemahlen).

Als Rieselfähigkeitsverbesserer wurde verwendet:

| | |
|---|---|
| pyrogene Kieselsäure: | |
| spezifisches Gewicht | 2.2 g/cm³ |
| Brechungsindex | 1.46 |
| Struktur | amorph |
| Teilchengröße | 0,007 µ |

Die erfindungsgemäßen Farbstoffzusammensetzungen wurden wie nachfolgend beschrieben hergestellt:
- Mischer:: Heizkühlmischkombination, Inhalt 5 Liter
- Ansatz:: entsprechend den nachstehend aufgeführten Beispielen
- Vormischen:: Ansatz ca. 1 min. bei U = 350 min⁻¹
- Heißmischung: 1. Phase:: U = 3100 min⁻¹
T = 90°C - 100°C
- Mischzeit:: ca. 7 min. - 10 min.
- 2. Phase:: U = 3100 min⁻¹
T = 95°C - 120°C
- Mischzeit:: ca. 4 min. - 10 min.
- Kühlmischung:: auf 20° - 30°C
- Mischzeit:: 10 min. - 15 min.
bei U = 360 min⁻¹
Herstellungsbeispiele

In den nachfolgenden Beispielen wurden nach vorstehend beschriebenen Verfahren folgende Farbmittelzusammensetzungen hergestellt. Als Poly-α-olefin wurden jeweils das vorstehend beschriebene Poly-α-olefin 1 eingesetzt:
1) 75 Gew.-% C.I. Pigment Yellow 83 (C.I. Nr. 21 108), 1,5 Gew.-% pyrogene Kieselsäure und 23,5 Gew.-% Poly-α-olefin
2) 75 Gew.-% C.I. Pigment Black 7 (C.I. Nr. 77 266), 0,5 Gew.-% pyrogene Kieselsäure und 24,5 Gew.-% Poly-α-olefin
3) 75 Gew.-% C.I. Pigment Red 38 (C.I. Nr. 21 120), 1 Gew.-% pyrogene Kieselsäure und 24 Gew.-% Poly-α-olefin
4) 75 Gew.-% C.I. Pigment Blue 15:1 (C.I. Nr. 74 160), 0,5 Gew.-% pyrogene Kieselsäure und 24,5 Gew.-% Poly-α-olefin
5) 75 Gew.-% C.I. Pigment Green 7 (C.I. Nr. 74 260), 3 Gew.-% pyrogene Kieselsäure und 22 Gew.-% Poly-α-olefin
6) 75 Gew.-% C.I. Solvent Blue 122 (C.I. Nr. 60 744), 5 Gew.-% pyrogene Kieselsäure und 20 Gew.-% Poly-α-olefin
7) 85 Gew.-% C.I. Pigment White 6 (C.I. Nr. 77 891), 2,5 Gew.-% pyrogene Kieselsäure und 12,5 Gew.-% Poly-α-olefin
8) 40 Gew.-% C.I. Solvent Violet 13 (C.I. Nr. 60 725),
   30 Gew.-% C.I. Pigment Blue 15:3 (C.I.Nr. 74 160),
   10,5 Gew.-% eines Antistatikums,
   1 Gew.-% pyrogene Kieselsäure und
   18,5 Gew.-% Poly-α-olefin
9) 70 Gew.-% C.I. Pigment Red 146 (C.I. Nr. 12 515),
   22,5 Gew.% Poly-α-olefin,
   7,0 Gew.-% Ölsäureamid,
   0,5 Gew.-% pyrogene Kieselsäure
10) 60 Gew.-% C.I. Pigment Black 7 (C.I. Nr. 77 266),
   35 Gew.-% Poly-α-olefin,
   5 Gew.-% neutraler, partieller Fettsäureester des Glyzerins
11) 70 Gew.-% C.I. Pigment Brown 25 (C.I. Nr. 12 510),
   22 Gew.-% Poly-α-olefin,
   7,5 Gew.-% Pentaerythrit-fettsäure-partialester,
   0,5 Gew.-% pyrogene Kieselsäure
12) 75 Gew.-% C.I. Pigment Green 7 (C.I. Nr. 74 260),
   19,5 Gew.-% Poly-α-olefin,
   5 Gew.-% Bariumsulfat,
   0,5 Gew.-% pyrogene Kieselsäure.

### Anwendungsbeispiele

Die Farbmittelzusammensetzungen gemäß Herstellungsbeispielen 1 bis 8 wurden angebatcht oder als Pulver direkt zur Färbung von Kunststoffen eingesetzt. Es wurden folgende Kunststoffe verwendet:
1) Polyester: Polyethylenterephthalat, Polybutylenterephthalat;
2) Polyethylen (PE);
3) Polypropylen (PP);
4) Styrol-acrylnitril-Copolymere (SAN);
5) Polyvinylchlorid (PVC);
6) Polymethylmethacrylat.

Die Prüfungen der Farbstärke (ST 1/3), Filterwert, Folienqualität und der Verarbeitung in der PP- und Polyester-Spinnfärbung zeigten eine deutliche Verbesserung der Qualität gegenüber handelsüblichen Produkten;
Es wurden Farbstärkeerhöhungen bis zu 25 % erreicht, bei höherer Brillianz und Reinheit, eine deutliche Verbesserung der Filterwerte, sowie eine deutliche Verbesserung der Verarbeitung im PP-Faserbereich und beim Spinnen von Polyesterfasern, auch bei unüblichen Konzentration von Farbmitteln und Füllstoffen.

## Patentansprüche

1. Farbmittelzusammensetzung, bestehend im wesentlichen aus einem oder mehreren in einem amorphen Poly-α-olefin in einer Konzentration von 60 bis 90 gew.-% feinverteilten organischen oder anorganischen Pigment und einem Hilfsmittel zur Verbesserung der Rieselfähigkeit, **dadurch gekennzeichnet, daß** das amorphe Poly-α-olefin zwischen 70 und 150°C schmilzt und ein Terpolymer aus Ethylen, Propylen und Buten-1 mit einem Buten-1-Anteil von 65 bis 80 Gew.-% ist.

2. Farbmittelzusammensetzung nach Anspruch 1, bestehend aus 70 bis 85 Gew.-% eines organischen oder anorganischen Pigments, 5 bis 39 Gew.-%, vorzugsweise 8,5 bis 35 Gew.-%, des amorphen Poly-α-olefins, 0,1 bis 10 Gew.-%, vorzugsweise 0,5 bis 7,5 %, eines Hilfsmittels zur Verbesserung der Rieselfähigkeit sowie 0 bis 15 Gew.-% üblicher Füllstoffe oder Additive.

3. Farbmittelzusammensetzung nach Anspruch 1 oder 2, bestehend aus 60 bis 80 Gew.-% an organischem Pigment, 12,5 bis 35 Gew.-% des amorphen Poly-α-olefins, 0,5 bis 5 Gew.-% an Rieselfähigkeitsverbesserer sowie 0 bis 7,5 Gew.-% üblicher Füllstoffe oder Additive.

4. Farbmittelzusammensetzung nach Anspruch 1 oder 2, bestehend aus 79 bis 85 Gew.-% an anorganischem Pigment, 12,5 bis 20,5 Gew.-% des amorphen Poly-α-olefins, 0,5 bis 2,5 Gew.-% an Rieselfähigkeitsverbesserer sowie 0 bis 2 Gew.-% üblicher Füllstoffe oder Additive.

5. Farbmittelzusammensetzung nach mindestens einem der Ansprüche 1 bis 4, **dadurch gekennzeichnet, daß** das Terpolymer eine Schmelzviskosität bei 190°C von 2500 bis 8200 mPas und ein mittleres Molekulargewicht von 40000 bis 50000 hat.

6. Farbmittelzusammensetzung nach mindestens einem der Ansprüche 1 bis 5, **dadurch gekennzeichnet, daß** das Hilfsmittel zur Verbesserung der Rieselfähigkeit Kieselsäure, vorzugsweise pyrogene Kieselsäure, Kreide,ein Silikat, vorzugsweise ein Aluminiumsilikat, ein Natrium-Aluminiumsilikat oder ein Calciumsilikat, oder ein Polyolester einer langkettigen Fettsäure, Ölsäureamid oder ein Glycerin-Fettsäurepartialester ist.

7. Farbmittelzusammensetzungen nach Anspruch 6, **dadurch gekennzeichnet, daß** das organische Pigment ein Azo- oder Disazopigment, ein verlacktes Azo- oder Disazopigment oder ein polycyclisches Pigment, vorzugsweise ein Phthalocyanin-, Chinacridon-, Perylen-, Dioxazin-, Anthrachinon-, Thioindigo-, Diaryl- oder Chinophthalon-Pigment, ist.

8. Verfahren zur Herstellung einer Farbmittelzusammensetzung nach mindestens einem der Ansprüche 1 bis 8, **dadurch gekennzeichnet, daß** man die Einzelkomponenten zunächst vormischt, anschließend die Mischung auf eine Temperatur von 5 bis 50°C über den Erweichungspunkt des amorphen Poly-α-olefins unter mechanischem Mischen erhitzt und schließlich die Mischung auf eine Temperatur von 10 bis 30°C abkühlt.

9. Verwendung einer Farbmittelzubereitung nach mindestens einem der Ansprüche 1 bis 8 zur Herstellung eines Masterbatches.

## Claims

1. A colorant composition consisting essentially of one or more organic or inorganic pigments finely dispersed in an amorphous poly-α-olefin in a concentration of 60 to 90% by weight, and a free-flow agent, **characterized in that** the amorphous poly-α-olefin melts at between 70 and 150°C and is a terpolymer comprising ethylene, propylene and butene-1, with a butene-1 content of 65 to 80% by weight.

2. The colorant composition of claim 1 consisting of 70 to 85% by weight of an organic or inorganic pigment, 5 to 39% by weight, preferably 8.5 to 35% by weight, of the amorphous poly-α-olefin, 0.1 to 10% by weight, preferably 0.5 to 7.5% by weight, of a free-flow agent and also 0 to 15% by weight of customary fillers or additives.

3. The colorant composition of claim 1 or 2 consisting of 60 to 80% by weight of organic pigment, 12.5 to 35% by weight of the amorphous poly-α-olefin, 0.5 to 5% by weight of free-flow agent and also 0 to 7.5% by weight of customary fillers or additives.

4. The colorant composition of claim 1 or 2 consisting of 79 to 85% by weight of inorganic pigment, 12.5 to 20.5% by weight of the amorphous poly-α-olefin, 0.5 to 2.5% by weight of free-flow agent and 0 to 2% by weight of customary fillers or additives.

5. The colorant composition of at least one of claims 1 to 4, **characterized in that** the terpolymer has a melt viscosity at 190°C of 2500 to 8200 mPas and an average molecular weight of 40000 to 50000.

6. The colorant composition of at least one of claims 1 to 5, **characterized in that** the free-flow agent is silica, preferably pyrogenic silica, chalk, a silicate, preferably an aluminum silicate, a sodium aluminum silicate or a calcium silicate, or a polyol ester of a long-chain fatty acid, oleamide or a partial fatty acid glyceride.

7. The colorant composition of claim 6, **characterized in that** the organic pigment is an azo or disazo pigment, a laked azo or disazo pigment or a polycyclic pigment, preferably a phthalocyanine, quinacridone, perylene, dioxazine, anthraquinone, thioindigo, diaryl or quinophthalone pigment.

8. A process for preparing a colorant composition as claimed in at least one of claims 1 to 7, **characterized in that** it comprises first premixing the individual components, then heating the mixture to a temperature of 5 to 50°C above the softening point of the amorphous poly-α-olefin with mechanical mixing, and finally cooling the mixture to a temperature of 10 to 30°C.

9. The use of a colorant composition as claimed in at least one of claims 1 to 8 for producing a masterbatch.

## Revendications

1. Composition de matières colorantes, constituée pour l'essentiel d'un ou plusieurs pigments organiques ou inorganiques répartis d'une manière fine dans une poly-α-oléfine amorphe à une concentration de 60 à 90 % en poids, et d'un adjuvant pour améliorer l'aptitude à l'écoulement libre, **caractérisée en ce que** la poly-α-oléfine amorphe fond entre 70 et 150°C et est un terpolymère d'éthylène, de propylène et de butène-1 ayant une teneur en butène-1 de 65 à 80 % en poids.

2. Composition de matières colorantes selon la revendication 1, constituée de 70 à 85 % en poids d'un pigment organique ou inorganique, de 5 à 39 % en poids et de préférence de 8,5 à 35 % en poids de la poly-α-oléfine amorphe, de 0,1 à 10 % en poids et de préférence de 0,5 à 7,5 % en poids d'un adjuvant pour améliorer l'aptitude à l'écoulement libre, ainsi que de 0 à 15 % en poids de matières ce charge ou d'additifs usuels.

3. Composition de matières colorantes selon la revendication 1 ou 2, constituée de 60 à 80 % en poids d'un pigment organique, de 12,5 à 35 % en poids de la poly-α-oléfine amorphe, de 0,5 à 5 % en poids de l'agent améliorant l'aptitude à l'écoulement libre, ainsi que de 0 à 7,5 % en poids de matières de charge ou d'additifs usuels.

4. Composition de matières colorantes selon la revendication 1 ou 2, constituée de 79 à 85 % en poids d'un pigment inorganique, de 12,5 à 20,5 % en poids de la poly-α-oléfine amorphe, de 0,5 à 2,5 % en poids de l'agent améliorant l'aptitude à l'écoulement libre, ainsi que de 0 à 2 % en poids d'autres matières de charge ou additifs usuels.

5. Composition de matières colorantes selon au moins l'une des revendications 1 à 4, **caractérisée en ce que** le terpolymère a une viscosité à l'état fondu à 190°C de 2500 à 8200 mPa.s et une masse moléculaire moyenne de 40 000 à 50 000.

6. Composition de matières colorantes selon au moins l'une des revendications 1 à 5, **caractérisée en ce que** l'adjuvant pour améliorer l'aptitude à l'écoulement libre est une silice, de préférence une silice pyrogène, une craie, un silicate, de préférence un aluminosilicate, un aluminosilicate de sodium ou un silicate de calcium, ou un ester d'un polyol d'un acide gras à longue chaîne, l'oléamide ou un ester partiel d'acide gras du glycérol.

7. Compositions de matières colorantes selon la revendication 6, **caractérisées en ce que** le pigment organique est un pigment azoïque ou disazoïque, un pigment azoïque ou disazoïque laqué ou un pigment polycyclique, de préférence un pigment de phtalocyanine, de quinacridone, de pérylène, de dioxazine, d'anthraquinone, de thioindigo, diarylique ou de quinophtalone.

8. Procédé de préparation d'une composition de matières colorantes selon au moins l'une des revendications 1 à 7, **caractérisé en ce qu'**on soumet d'abord les composants individuels à un mélange préalable, puis on chauffe le mélange à une température de 5 à 50°C supérieure au point de ramollissement de la poly-α-oléfine amorphe en présence d'un mélange mécanique, puis on refroidit le mélange à une température de 10 à 30°C.

9. Utilisation d'une préparation de matières colorantes selon au moins l'une des revendications 1 à 8 pour préparer un mélange-maître.
